# FASCICULE DE BREVET EUROPEEN

(11) **EP 1 509 562 B1**
(45) Date de publication et mention de la délivrance du brevet: **03.03.2010**
(21) Numéro de dépôt: 03749903.5
(22) Date de dépôt: 17.04.2003
(51) Int. Cl.: C08G 77/38, C08G 77/14

(54) **SILICONE A FONCTION DICARBOXY**
SILIKON MIT DICARBOXYFUNKTION
SILICON WITH DICARBOXY FUNCTION

(30) Priorité: 09.05.2002 US 379575 P
(43) Date de publication de la demande: 02.03.2005
(73) Titulaire: RHODIA CHIMIE, 92512 Boulogne-Billancourt (FR)
(72) Inventeur: OLIER, Philippe, F-69007 Lyon (FR)
(74) Mandataire: Boittiaux, Vincent
(86) Numéro de dépôt international: PCT/FR2003/001237
(87) Numéro de publication internationale: WO 2003/095529

(56) Documents cités:
- EP-A- 0 095 676
- EP-B- 0 004 074
- DE-A- 19 707 970
- US-A- 4 405 469
- US-A- 4 876 152
- US-A- 5 087 443
- US-A- 6 100 358

## Description

L'invention concerne des polyorganosiloxanes à fonction dicarboxy ; ils peuvent être utilisés pour le traitement hydrofuge de surfaces, en particulier de surfaces inorganiques ou de surfaces contenant un métal alcalin ou alcalino-terreux ; ils peuvent également être utilisés en tant qu'additifs anti-corrosion pour le traitement de surfaces métalliques.

Des silicones organofonctionnelles sont bien connues dans la technique. Les motifs siloxane peuvent être fonctionnalisés avec des substituants tels qu'un carboxyalkyle (documents EP-A-196 169 ; US-A-5 702 490), un carboxyalkylaminoalkyle (document US-A-5 516 869), un carboxyétheralkyle (document US-A-4 658 049), avec des radicaux dérivés d'un anhydride alcénylsuccinique (document US-A-4 876 152) éventuellement amidé (document US-A-6 007 801), et peuvent être utilisés pour le traitement de surfaces dans divers types d'industries, telles que le métal, le cuir, l'hygiène personnelle, les matière plastiques, la maçonnerie, etc.

On a à présent constaté que l'on peut produire de nouveaux polyorganosiloxanes fonctionnalisés, et que de tels composés sont utiles pour le traitement hydrofuge de surfaces, en particulier de surfaces inorganiques telles que le verre, ou de surfaces contenant un métal alcalin ou alcalino-terreux, telles que les céramiques, le carrelage, les murs, la maçonnerie, etc ; ils peuvent également être utilisés en tant qu'additifs anti-corrosion pour le traitement de surfaces métalliques.

Les nouveaux polyorganosiloxanes à fonction dicarboxy de la présente invention sont de formule (I)

X (R⁴ R⁵ Si O)ₚ (R⁶ A Si O)_{q} Y (I)

dans laquelle
* le groupe terminal X représente
   - un groupe terminal triorganosiloxyle de formule R¹ R² R³ Si O, ou
   - un groupe terminal Z, où Z représente -OH
* le groupe terminal Y représente
   - un groupe terminal triorganosilyle de formule Si R³ R² R¹, ou
   - un groupe terminal W, où W représente -H
* les symboles R¹ à R⁶, qui peuvent être identiques ou différents, représentent un radical alkyle en C₁-C₈ linéaire ou ramifié ou phényle, de préférence un méthyle
* le symbole A représente le radical dicarboxy de formule

   -(CH₂)₃-CH(COOH)-CH₂COOH

   ou les sels de métaux alcalins, de métaux alcalino-terreux ou d'ammonium de celui-ci
* p est une valeur moyenne s'échelonnant de 0 à 1 000, de préférence de 0 à 500, plus particulièrement de 5 à 200
* q est une valeur moyenne s'échelonnant de 1 à 100, de préférence de 1 à 50
* le rapport entre le nombre de groupes terminaux Z et W et le nombre total de groupes terminaux X et Y étant de 0/100 à 75/100, de préférence de 0/100 à 30/100.

Dans un mode de réalisation préféré, le rapport p/q est de 1/3 à 99/1, de préférence de 1/1 à 10/1.

Les sels du radical dicarboxy peuvent être des sels de sodium, de potassium, de lithium, de calcium, de baryum, des sels d'ammonium substitués ou non substitués (méthyl-, diméthyl-, triméthyl-, tétraméthylammonium, diméthylpipéridinium).

Les nouveaux polyorganosiloxanes à fonction dicarboxy de la présente invention peuvent être obtenus par une réaction d'hydrosilylation d'un polyalkylhydrogénosiloxane de formule (II)

R¹ R² R³ Si O (R⁴ R⁵ Si O)ₚ (R⁶ H Si O)_{q} Si R³ R² R¹ (II)

dans laquelle les différents symboles présentent la même signification que ci-dessus,
et de l'anhydride allylsuccinique à l'aide d'une quantité efficace d'un catalyseur métallique d'hydrosilylation (platine), suivie d'une réaction d'hydrolyse des fonctions anhydride.

L'hydrosilylation est une réaction bien connue (documents US-A-3 159 601 ; US-A-3 159 662 ; US-A-3 814 730, etc.).

Elle peut être réalisée à une température de 20 à 200°C, de préférence de 60 à 120°C, préférablement à l'aide d'un catalyseur au platine KARSTEDT (de 1 à 300 ppm, de préférence de 5 à 50 ppm en poids de Pt). Les quantités relatives de polyalkylhydrogénosiloxane et d'anhydride allylsuccinique correspondent à un excès stoechiométrique d'anhydride allylsuccinique (au plus 5 mol d'anhydride allylsuccinique par mole de SiH, de préférence au plus 2 mol du composé anhydride alpha-alcénylique par mole de SiH).

La réaction d'hydrolyse peut être réalisée avec de l'eau à une température s'échelonnant de la température ambiante à 150°C, de préférence de 40 à 120°C, avec ou sans catalyseur. Des catalyseurs appropriés pour la réaction peuvent être des acides de Lewis tels que le TiCl₄, le ZnCl₂, le MgCl₂, ou des acides ou des bases de Bronstedt tels que le H₂SO₄, le HCl, le KOH, le NaHCO₃, en une quantité s'échelonnant de 0,05 à 5%.

Les nouveaux polyorganosiloxanes à fonction dicarboxy de la présente invention peuvent être utilisés pour le traitement hydrofuge de surfaces telles que le verre, en particulier de surfaces inorganiques ou de surfaces contenant un métal alcalin ou alcalino-terreux, telles que les céramiques, le carrelage, les murs, le bois, la maçonnerie, etc.

Les nouveaux polyorganosiloxanes à fonction dicarboxy de la présente invention peuvent également être utilisés en tant qu'additif anti-corrosion dans un lubrifiant aqueux pour le traitement de surfaces métalliques.

Les polyorganosiloxanes à fonction dicarboxy peuvent être incorporés dans le lubrifiant aqueux à environ 0,1 à 4% en poids, de préférence à 0,3 à 1% en poids (en matière sèche).

Un lubrifiant aqueux comprend habituellement au moins un acide mono- ou polycarboxylique saturé ou insaturé.

L'acide carboxylique renferme de préférence une seule fonction carboxy. Plus particulièrement, il correspond à la formule R-COOH ; dans laquelle R représente un radical alkyle linéaire ou ramifié ou un radical alcényle renfermant une ou plusieurs liaisons éthyléniquement insaturées, renfermant de 5 à 40 atomes de carbone, de préférence de 7 à 30 atomes de carbone, éventuellement substitué par un ou plusieurs radicaux hydroxy et/ou au moins une fonction carboxylique. Des exemples d'acides carboxyliques préférés sont les acides palmitique, béhénique, stéarique, isostéarique, palmitoléique, oléique, pétrosélénique, érucique, linoléique, linolénique et ricinoléique.

L'acide carboxylique est de préférence sous la forme d'un composé neutralisé.

L'agent neutralisant est choisi parmi des bases minérales ou organiques, qui sont avantageusement hydrosolubles.

Des exemples non limitatifs de tels composés minéraux sont des hydroxydes, des hydroxycarbonates, des carbonates et des bicarbonates de métaux alcalins, et une solution ammoniacale.

Des bases organiques appropriées pouvant être mentionnées comprennent des amines primaires, secondaires ou tertiaires renfermant de 1 à 40 atomes de carbone, éventuellement substituées par un ou plusieurs radicaux hydroxy et/ou un ou plusieurs groupes oxyalkylène. Lesdits groupes alkylène sont de préférence des motifs oxyéthylène. En outre, le nombre de motifs oxyalkylène, s'ils sont présents, est de 100 ou moins.

Les bases organiques sont de préférence choisies parmi les amines, renfermant éventuellement un ou plusieurs groupes hydroxy, ayant au moins trois atomes de carbone, linéaires, ramifiées ou cycliques, et ayant au moins deux fonctions amine, primaires et/ou secondaires, qui sont séparées deux à deux, par de 2 à 5 atomes de carbone.

L'aminoéthyléthanolamine, le 1,2-diaminopropane, la diméthylaminopropylamine, la diéthylènetriamine, la méthylpentaméthylènediamine, le 1,3-diaminopropane, la tétraéthylènepentamine, le 1,4-diaminobutane, la pipérazine, le 1,4-diazabicyclo[2.2.2]octane, le 1,2-diaminocyclohexane, la tétraméthylpropanediamine, sont des exemples de telles amines.

De préférence, le rapport molaire entre la fonction amine et la fonction acide carboxylique est d'au moins 1, et avantageusement d'au moins 2. De préférence, et pour des raisons économiques, le rapport molaire est d'au plus 10.

Par ailleurs, les lubrifiants aqueux comprennent au moins un tensioactif non ionique et/ou tensioactif anionique.

En ce qui concerne les tensioactifs non ioniques, on peut citer les composés suivants :
■ des alkylphénols polyalcoxylés
■ des mono-, di- et tri-(arylalkyl)phénols polyalcoxylés
■ des alcools aliphatiques polyalcoxylés
■ des mono-, di- et triglycérides polyalcoxylés
■ un ester de sorbitane polyalcoxylé
■ des amines, des amides ou des amidoamines gras polyalcoxylés
seuls ou combinés.

De préférence, les motifs polyalcoxylés (oxyéthylène et/ou oxypropylène et/ou oxybutylène) sont tels que la valeur de l'équilibre hydrophile-lipophile soit d'au moins 12. A titre illustratif, le nombre moyen de motifs oxyalkylène est compris entre 2 et 100.

En ce qui concerne les tensioactifs anioniques, on peut utiliser des esterphosphates, des alkylestersulfonates, des alkylbenzènesulfonates, des alkylsulfates, des alkyléthersulfates, des alkylamidesulfates et leurs mélanges dans les lubrifiants aqueux.

Le tensioactif anionique est de préférence choisi parmi les esterphosphates de formule suivante : [R(OA)y]ₓ-P(=O)(OH)_{x'}, dans laquelle formule R, qui peut ou peut ne pas être identique, représente un radical hydrocarboné renfermant de 1 à 30 atomes de carbone, A est un radical alkylène linéaire ou ramifié renfermant de 2 à 4 atomes de carbone, y, qui est une valeur moyenne, est dans la plage de 0 à 100, x et x' valant 1 ou 2, à condition que la somme de x et x' vaille 3.
Plus particulièrement, R est un radical hydrocarboné saturé ou insaturé, aliphatique, cycloaliphatique ou aromatique, renfermant de 1 à 30 atomes de carbone. De préférence, les radicaux R, qui peuvent être identiques ou différents, sont des radicaux alkyle ou alcényle portant une ou plusieurs liaisons éthyléniquement insaturées, linéaires ou ramifiées, renfermant de 8 à 26 atomes de carbone. Des exemples de tels radicaux pouvant être cités en particulier sont les radicaux stéaryle, isostéaryle, oléyle, linoléyle et linolényle. En outre, les radicaux R, qui peuvent ou peuvent ne pas être identiques, peuvent être des radicaux aromatiques portant des substituants alkyle, arylalkyle ou alkylaryle ; ces radicaux renferment de 6 à 30 atomes de carbone. Des exemples de tels radicaux pouvant être cités comprennent des radicaux nonylphényle, mono-, di- et tristyrylphényle.

Plus particulièrement, le groupe OA correspond à un radical oxyéthylène, oxypropylène ou oxybutylène ou leurs mélanges. De préférence, ledit groupe correspond à un radical oxyéthylène et/ou oxypropylène.

En ce qui concerne la valeur de y, qui est une valeur moyenne, elle est de préférence dans la plage de 0 à 80.

Les quantités de polyorganosiloxanes à fonction dicarboxy de la présente invention, d'acide carboxylique, de tensioactif non ionique et/ou anionique et d'agent neutralisant sont telles que l'extrait sec des lubrifiants soit d'au moins 10% en poids. Plus précisément, l'extrait sec est de 10 à 70% en poids.

Il est à noter que le lubrifiant peut également comprendre un agent tampon, afin d'obtenir un pH compris entre 7 et 9.

Par exemple, on utilise des agents tampons tels que des monoamines, des alcanolamines (éthanolamine, monoéthanolamine) ou l'acide phosphorique.

Enfin, les lubrifiants aqueux peuvent également comprendre des additifs, en général en une quantité totale d'au plus 10% en poids, par rapport à l'extrait sec du lubrifiant, qui sont traditionnels dans ce domaine, comme des conservateurs, des additifs de pression extrême, des agents anti-mousse ou des agents stabilisants.

Il est également possible d'ajouter des particules solides, telles que des particules de cire ou un mono-, di- ou triglycéride présentant un point de fusion de préférence supérieur à 60°C.

En cas de présence de ces particules, la quantité totale est avantageusement d'au plus 50% en poids de l'extrait sec du lubrifiant.

Le lubrifiant est préparé en mélangeant tous les ingrédients requis sous agitation.

La température peut être déterminée sans aucune difficulté par l'homme de la technique. A titre d'exemple, la température est comprise entre 20 et 90°C.

Les lubrifiants aqueux sont habituellement utilisés après une étape de dilution, qui est en général réalisée en ajoutant de l'eau, comprenant éventuellement des additifs, au lubrifiant.

La quantité d'eau ajoutée est telle que l'extrait sec du lubrifiant soit inférieur ou égal à 5% en poids, et de préférence compris entre 2 et 4% en poids.

La température à laquelle la dilution est réalisée correspond en général à la température ambiante.

Les lubrifiants aqueux décrits ci-dessus sont utilisés pour la déformation et la transformation de métaux. Le terme « déformation » signifie les opérations d'étirage et de laminage et l'expression « opérations de transformation » désigne la découpe de métaux.

Les métaux qui peuvent être soumis à de tels traitements sont en particulier et en principe des aciers, des aciers inoxydables, l'aluminium, le cuivre, le zinc, l'étain, des alliages à base de cuivre (bronze, laiton), etc.

L'invention englobe également un procédé pour conférer des avantages anti-corrosion à des surfaces métalliques, en déposant, au cours d'une opération de déformation ou de transformation d'un métal, une quantité efficace d'un polyorganosiloxane à fonction dicarboxy au moyen d'un lubrifiant aqueux. Elle englobe également le lubrifiant aqueux comprenant le polyorganosiloxane à fonction dicarboxy.

Les exemples suivants sont indiqués à titre illustratif.

### Exemple 1

Préparation d'un polydiméthylsiloxane à fonction dicarboxy ayant des groupes -(CH₂)₃-CH(COOH)-CH₂COOH pendants.

93,7 g (c'est-à-dire 0,67 mol) d'anhydride allylsuccinique, 52 g de toluène et 1,01 g d'une solution de catalyseur Kardtedt (0,1% de Pt dans de l'hexaméthyldisiloxane) sont introduits dans un réacteur de 500 ml.

La masse réactionnelle est chauffée à 90°C ; 120 g (c'est-à-dire 0,45 mol de SiH) d'un polydiméthylhydrogénosiloxane de formule

Me₃SiO (SiMe₂O) ₉ (SiMeHO) ₄SiMe₃

et renfermant 3,75 mol de SiH/kg, sont ajoutés en l'espace de 3 heures.

La quantité de SiH (déterminée par gazométrie) transformée à la fin de l'addition est de 96,1% ; elle est de 100% 2 heures après la fin de l'addition.

Les matières volatiles sont éliminées par évaporation sous vide (3 mbar) en l'espace de 10 heures à 150°C.

15 g d'eau déminéralisée sont alors ajoutés afin d'hydrolyser les fonctions anhydride succiniques.

La réaction d'hydrolyse est suivie d'une analyse infrarouge (bande acide à 1 714 cm⁻¹, bande anhydride à 1 863 et 1 782 cm⁻¹).

Lorsque la réaction d'hydrolyse est terminée (48 heures), 100 g de toluène sont ajoutés afin d'éliminer l'eau par voie azéotropique.

133,5 g (correspondant à un rendement de 82%) d'une huile visqueuse sont récupérés.

L'analyse RMN a confirmé la structure générale suivante du produit obtenu :

Me₃SiO(SiMe₂O)₉(SiMeAO)₄SiMe₃

dans laquelle A représente -(CH₂)₃-CH(COOH)-CH₂COOH.

### Exemple 2

Préparation d'un polydiméthylsiloxane à fonction dicarboxy ayant des groupes -(CH₂)₃-CH(COOH)-CH₂COOH pendants.

49,8 g (c'est-à-dire 0,36 mol) d'anhydride allylsuccinique, 44 g de toluène et 1,139 g d'une solution de catalyseur Kardtedt (0,1% de Pt dans de l'hexaméthyldisiloxane) sont introduits dans un réacteur de 500 ml.

La masse réactionnelle est chauffée à 90°C ; 150,3 g (c'est-à-dire 0,266 mol de SiH) d'un polydiméthylhydrogénosiloxane de formule

Me₃SiO (SiMe₂O) ₁₀₀ (SiMeHO) ₁₅SiMe₃

et renfermant 1,77 mol de SiH/kg, sont ajoutés en l'espace d'1 heure.

La quantité de SiH (déterminée par gazométrie) transformée à la fin de l'addition est de 86% ; elle est de 100% 16 heures après la fin de l'addition.

Les matières volatiles sont éliminées par évaporation sous vide (6 mbar) en l'espace de 10 heures à 150°C.

101 g de toluène sont ajoutés ; la masse réactionnelle est filtrée.

6,7 g d'eau déminéralisée sont alors ajoutés afin d'hydrolyser les fonctions anhydride succiniques.

La réaction d'hydrolyse est suivie d'une analyse infrarouge (bande acide à 1 714 cm⁻¹, bande anhydride à 1 866 et 1 788 cm⁻¹).

Lorsque la réaction d'hydrolyse est terminée (6 jours), l'eau est éliminée par voie azéotropique.

146,3 g (correspondant à un rendement de 80%) d'une huile visqueuse sont récupérés.

L'analyse RMN a confirmé la structure générale suivante du produit obtenu :

Me₃SiO (SiMe₂O)₁₀₀ (SiMeAO)₁₅SiMe₃

dans laquelle A représente -(CH₂)₃-CH(COOH)-CH₂COOH.

### Exemple 3

### Traitement hydrofuge de surfaces

On emploie une surface céramique constituée de carreaux céramiques, pré-nettoyés à l'éthanol.

Un film de 50 µm d'épaisseur du produit de l'exemple 1 est déposé sur les carreaux céramiques en utilisant une coucheuse à lame (« tire film »). Les carreaux céramiques traités sont soit rincés (« avec rinçage ») à l'eau pure, soit non rincés (« sans rinçage »).

Une mesure de l'angle de contact entre l'eau et les surfaces traitées est alors réalisée sur un assemblage Ramé-Hart. Elle est exprimée en degrés.

Les valeurs de l'angle de contact fournissent des informations concernant la nature hydrophobe du polymère.

Les résultats obtenus sont indiqués ci-dessous :

| | **Angle de contact** |
|---|---|
| **Comparatif (sans traitement)** | 36° |
| **Traitement avec le produit de l'exemple 1 « sans rinçage »** | 65° |
| **Traitement avec le produit de l'exemple 1 « avec rinçage »** | 45° |

## Revendications

1. Polyorganosiloxanes à fonction dicarboxy de formule
X (R⁴ R⁵ Si O)ₚ (R⁶ A Si O)_{q} Y (I)
dans laquelle
* le groupe terminal X représente
· un groupe terminal triorganosiloxyle de formule R¹ R² R³ Si O, ou
· un groupe terminal Z, où Z représente -OH
* le groupe terminal Y représente
· un groupe terminal triorganosilyle de formule Si R³ R²R¹, ou
· un groupe terminal W, où W représente -H
* les symboles R¹ à R⁶, qui peuvent être identiques ou différents, représentent un radical alkyle en C₁-C₈ linéaire ou ramifié ou phényle, de préférence un méthyle
* le symbole A représente le radical dicarboxy de formule
- (CH₂) ₃-CH (COOH) -CH₂COOH
ou les sels de métaux alcalins, de métaux alcalino-terreux ou d'ammonium de celui-ci
* p est une valeur moyenne s'échelonnant de 0 à 1 000, de préférence de 0 à 500, plus particulièrement de 5 à 200
* q est une valeur moyenne s'échelonnant de 1 à 100, de préférence de 1 à 50
* le rapport entre le nombre de groupes terminaux Z et W et le nombre total de groupes terminaux X et Y étant de 0/100 à 75/100, de préférence de 0/100 à 30/100.

2. Polyorganosiloxanes à fonction dicarboxy selon la revendication 1, dans lesquels le rapport p/q est de 1/3 à 99/1, de préférence de 1/1 à 10/1.

3. Procédé de préparation des polyorganosiloxanes à fonction dicarboxy tels que définis dans l'une ou l'autre des revendications précédentes, comprenant les étapes de :
(a) hydrosilylation d'un polyalkylhydrogénosiloxane de formule
R¹ R² R³ Si O (R⁴ R⁵ Si O)ₚ (R⁶ H Si O)_{q} Si R³ R² R¹
dans laquelle les différents symboles présentent la même signification que dans les revendications précédentes, avec l'anhydride allylsuccinique à l'aide d'une quantité efficace d'un catalyseur métallique d'hydrosilylation ; et
(b) hydrolyse du polyorganosiloxane à fonction anhydride de l'étape (a).

4. Utilisation des polyorganosiloxanes à fonction dicarboxy selon la revendication 1 ou 2, en tant qu'additif anti-corrosion dans un lubrifiant aqueux pour le traitement de surfaces métalliques.

5. Utilisation selon la revendication 4, dans laquelle la quantité de polyorganosiloxane à fonction dicarboxy est de 0,1 à 4% en poids, de préférence de 0,3 à 1% en poids du lubrifiant.

6. Procédé pour le traitement anti-corrosion de surfaces métalliques par dépôt, au cours d'une opération de déformation ou de transformation d'un métal, d'une quantité efficace d'un polyorganosiloxane à fonction dicarboxy au moyen d'un lubrifiant aqueux.

7. Procédé selon la revendication 6, dans lequel la quantité de polyorganosiloxane à fonction dicarboxy est de 0,1 à 4% en poids, de préférence de 0,3 à 1% en poids de lubrifiant.

8. Lubrifiant aqueux pour le traitement de surfaces métalliques, comprenant au moins un polyorganosiloxane à fonction dicarboxy en une quantité efficace pour empêcher la corrosion des surfaces métalliques.

9. Lubrifiant aqueux selon la revendication 8, dans lequel la quantité de polyorganosiloxane à fonction dicarboxy est de 0,1 à 4% en poids, de préférence de 0,3 à 1% en poids de lubrifiant.

## Claims

1. Dicarboxy functionalized polyorganosiloxanes having the formula
X (R⁴ R⁵ Si O)ₚ (R⁶ A Si O)_{q} Y (I)
wherein
* the X end group represents
· a triorganosiloxyl end group of formula R¹ R² R³ Si O, or
· a Z end group, wherein Z represents -OH
* the Y end group represents
· a triorganosilyl end group of formula Si R³ R² R¹ , or
· a W end group, wherein W represents -H
* the symbols R¹ to R⁶, which may be identical or different, represent a linear or branched C₁-C₈ alkyl radical or phenyl radical, preferably methyl
* the symbol A represents the dicarboxy radical of formula
(CH₂)₃-CH(COOH)-CH₂COOH
or the alkali metal, alkaline-earth metal or ammonium salts thereof
* p is an average value ranging from 0 to 1000, preferably from 0 to 500, more particularly from 5 to 200
* q is an average value ranging from 1 to 100, preferably from 1 to 50
* the ratio of the number of Z and W end groups to the total number of X and Y end groups being from 0/100 to 75/100, preferably from 0/100 to 30/100.

2. Dicarboxy functionalized polyorganosiloxanes according to Claim 1, in which the p/q ratio is from 1/3 to 99/1, preferably from 1/1 to 10/1.

3. Method of preparing the dicarboxy functionalized polyorganosiloxanes as defined in either of the preceding claims, comprising the steps of:
(a) hydrosilylation of a polyalkylhydrogenosiloxane having the formula
R¹ R² R³ Si O (R⁴ R⁵ Si 0)ₚ (R⁶ H Si O)_{q} Si R³ R² R¹
wherein the different symbols have the same meaning as in the preceding claims, with allyl succinic anhydride with the aid of an effective amount of an hydrosilylation metal catalyst ; and
(b) hydrolysis of the anhydride functionalized polyorganosiloxane of step (a).

4. Use of the dicarboxy functionalized polyorganosiloxanes according to Claim 1 or 2, as an anti-corrosion additive in an aqueous lubricant for the treatment of metal surfaces.

5. Use according to Claim 4, in which the amount of dicarboxy functionalized polyorganosiloxane is from 0.1 to 4% by weight, preferably from 0.3 to 1% by weight of lubricant.

6. Method for the anti-corrosion treatment of metal surfaces by depositing, in the course of a metal deformation or transformation operation, an effective amount of a dicarboxy functionalized polyorganosiloxane by means of an aqueous lubricant.

7. Method according to Claim 6, in which the amount of dicarboxy functionalized polyorganosiloxane is from 0.1 to 4% by weight, preferably from 0.3 to 1% by weight of lubricant.

8. Aqueous lubricant for the treatment of metal surfaces, comprising at least one dicarboxy functionalized polyorganosiloxane in an amount effective to prevent corrosion of metal surfaces.

9. Aqueous lubricant according to claim 8, in which the amount of dicarboxy functionalized polyorganosiloxane is from 0.1 to 4% by weight, preferably from 0.3 to 1% by weight of lubricant.

## Patentansprüche

1. Dicarboxyfunktionelle Polyorganosiloxane der Formel
X(R⁴R⁵SiO)ₚ(R⁶ASiO)_{q}Y (I)
worin
* die Endgruppe X für
· eine Triorganosilyl-Endgruppe der Formel R¹R²R³SiO oder
· eine Endgruppe Z, worin Z für OH steht, steht,
* die Endgruppe Y für
· eine Triorganosilyl-Endgruppe der Formel SiR³R²R¹ oder
· eine Endgruppe W, worin W für H steht, steht,
* die Symbole R¹ bis R⁶, die gleich oder verschieden sein können, für einen linearen oder verzweigten C₁-C₈-Alkyl- oder Phenylrest, vorzugsweise Methyl, stehen,
* das Symbol A für den Dicarboxyrest der Formel
- (CH₂) ₃-CH (COOH) -CH₂COOH
oder Alkalimetall-, Erdalkalimetall- oder Ammoniumsalze davon steht,
* p für einen durchschnittlichen Wert im Bereich von 0 bis 1000, vorzugsweise 0 bis 500, insbesondere 5 bis 200, steht,
* q für einen durchschnittlichen Wert im Bereich von 1 bis 100, vorzugsweise 1 bis 50, steht,
* wobei das Verhältnis der Zahl der Endgruppen Z und W zu der Gesamtzahl der Endgruppen X und Y 0/100 bis 75/100, vorzugsweise 0/100 bis 30/100, beträgt.

2. Dicarboxyfunktionelle Polyorganosiloxane nach Anspruch 1, worin das Verhältnis p/q 1/3 bis 99/1, vorzugsweise 1/1 bis 10/1 beträgt.

3. Verfahren zur Herstellung der dicarboxyfunktionellen Polyorganosiloxane gemäß einem der vorhergehenden Ansprüche, bei dem man:
(a) ein Polyalkylhydrogensiloxan der Formel
R¹R²R³SiO (R⁴R⁵SiO)ₚ (R⁶HSiO) _{q}SiR³R²R¹
worin die verschiedenen Symbole die gleiche Bedeutung wie in den vorhergehenden Ansprüchen besitzen, mit Hilfe einer wirksamen Menge eines Hydrosilylierungsmetallkatalysators mit Allylbernsteinsäureanhydrid hydrosilyliert und
(b) das anhydridfunktionelle Polyorganosiloxan aus Schritt (a) hydrolysiert.

4. Verwendung der dicarboxyfunktionellen Polyorganosiloxane nach Anspruch 1 oder 2 als Antikorrosionsadditiv in einem wäßrigen Schmiermittel zur Behandlung von Metalloberflächen.

5. Verwendung nach Anspruch 4, wobei die Menge an dicarboxyfunktionellem Polyorganosiloxan 0,1 bis 4 Gew.-%, vorzugsweise 0,3 bis 1 Gew.-%, des Schmiermittels beträgt.

6. Verfahren zur Antikorrosionsbehandlung von Metalloberflächen durch Abscheiden einer wirksamen Menge eines dicarboxyfunktionellen Polyorganosiloxans mit Hilfe eines wäßrigen Schmiermittels im Lauf eines Metallverformungs- oder Metallumformungsarbeitsgangs.

7. Verfahren nach Anspruch 6, bei dem die Menge an dicarboxyfunktionellem Polyorganosiloxan 0,1 bis 4 Gew.-%, vorzugsweise 0,3 bis 1 Ges.-%, des Schmiermittels beträgt.

8. Wäßriges Schmiermittel zur Behandlung von Metalloberflächen, enthaltend mindestens ein dicarboxyfunktionelles Polyorganosiloxan in einer zur Verhinderung der Korrosion der Metalloberflächen wirksamen Menge.

9. Wäßriges Schmiermittel nach Anspruch 8, wobei die Menge an dicarboxyfunktionellem Polyorganosiloxan 0,1 bis 4 Gew.-%, vorzugsweise 0,3 bis 1 Ges.-%, des Schmiermittels beträgt.
